# EUROPÄISCHE PATENTANMELDUNG

(11) **EP 1 308 830 A1**
(43) Veröffentlichungstag der Anmeldung: **07.05.2003**
(21) Anmeldenummer: 01126051.0
(22) Anmeldetag: 31.10.2001
(51) Int. Cl.: G06F 3/033

(54) **Verfahren zum Eingeben von Informationen in eine elektronische Vorrichtung und elektronische Vorrichtung**

(71) Anmelder: SIEMENS AKTIENGESELLSCHAFT, 80333 München (DE)
(72) Erfinder: Andert, Markus, 80799 München (DE); Blaimberger, Frank, 82335 Berg-Hoehenrain (DE); Engl, Walter, 83620 Feldkirchen-Westerham (DE); Holz auf der Heide, Bernd, 81549 München (DE); Jarczyk, Alexander, Dr., 85356 Freising (DE); Keller, Roland, 80639 München (DE)

(57) **Zusammenfassung**

Die Erfindung betrifft ein Verfahren zum Eingeben von Informationen in eine elektronische Vorrichtung mit einer Eingabeeinrichtung, wobei die Eingabeeinrichtung ein flächiges Eingabefeld und eine auf diesem bewegbare Aktivierungszone aufweist, wobei weiter das Eingabefeld wenigstens einen Spurerfassungsbereich zur Erfassung von Bewegungsspuren der Aktivierungszone und wenigstens einen Funktionsauswahlbereich zur Auswahl einer diesem zugeordneten Bedienungsfunktion aufweist, wobei dann, wenn die Aktivierungszone innerhalb des Funktionsauswahlbereichs ortsstabil positioniert wird (S107), die zugeordnete Bedienungsfunktion ausgewählt wird (S108), und wobei dann, wenn die Aktivierungszone innerhalb des Funktionsauswahlbereichs bewegt wird (S102), eine Auswahl der Bedienungsfunktion unterbleibt.

## Beschreibung

Die vorliegende Erfindung betrifft ein Verfahren zum Eingeben von Informationen in eine elektronische Vorrichtung mit einer Eingabeeinrichtung, wobei die Eingabeeinrichtung ein flächiges Eingabefeld und eine auf diesem bewegbare Aktivierungszone aufweist, wobei weiter das Eingabefeld wenigstens einen Spurerfassungsbereich zur Erfassung von Bewegungsspuren der Aktivierungszone und wenigstens einen Funktionsauswahlbereich zur Auswahl einer diesem zugeordneten Bedienungsfunktion aufweist.

Derartige elektronische Vorrichtungen sind aus dem Stand der Technik bekannt. Diese sind beispielsweise miniaturisiert ausgebildet, so daß sie ergonomisch in einer Hand gehalten und von einem Benutzer mit einem Finger oder einem Bedienungsstift bedient werden können. Derartige elektronische Vorrichtungen sind beispielsweise handflächengroß als PDA (persönlicher digitaler Assistent) oder weiter miniaturisiert in Form einer Armbanduhr mit Bedienungsfeld ausgebildet. Die Eingabeeinrichtung kann dabei als Touchscreen oder als Display ausgebildet sein, wobei die Aktivierungszone beispielsweise mittels eines Mauszeigers oder durch die innerhalb des Touchscreens vermittels Berührung aktivierte Stelle repräsentiert wird.

Die Eingabeeinrichtung einer derartigen elektronischen Vorrichtung kann beispielsweise dazu genutzt werden bestimmte Zeichen einzugeben, indem die Aktivierungszone entsprechend der Zeichenform auf dem Eingabefeld bewegt und die Bewegungsspur verfolgt wird. So ist es bereits bekannt, über eine berührungsempfindliche Oberfläche Schriftzeichen einzugeben. Gleichermaßen ist es bekannt, auf dem Display sogenannte Softkeys abzubilden, welche als virtuelle Druckknöpfe (Buttons) wirksam sind und durch direkte Druckbetätigung - im Falle eines berührungsempfindlichen Eingabefelds - oder durch Betätigung per optisch sichtbarer Aktivierungszone - im Falle eines reinen Displays mit Mauszeiger - aktiviert werden können. Diesen Softkeys sind bestimmte Funktionen zugeordnet, beispielsweise Menüfunktionen oder anderweitige Bedienungsbefehle zur Bedienung der elektronischen Vorrichtung, welche nach Auswahl aktiviert werden.

Es stellt sich aufgrund der zunehmenden Leistungsfähigkeit derartiger elektronischer Vorrichtungen und aufgrund des Trends zu einer weiteren Miniaturisierung das Problem, daß eine Vielzahl von Leistungsmerkmalen dem Benutzer auf dem verhältnismäßig kleinen Eingabefeld der Eingabeeinrichtung zur Auswahl angeboten werden sollen. Um diesem Problem gerecht zu werden, bestand bisher die Möglichkeit, verschiedene Eingabemoden bereitzustellen, beispielsweise derart, daß in einem ersten Eingabemodus lediglich die Bedienung der einzelnen Softkeys möglich war, wohingegen in einem zweiten Eingabemodus die Möglichkeit zur Zeicheneingabe bereitgestellt wurde ohne eine unmittelbare Aktivierung der Softkeys zuzulassen. Dies hat jedoch zur Folge, daß ein Benutzer stets durch eine bestimmte Bedienungsaktion zwischen diesen beiden Eingabemodi umschalten muß, was die Bedienung einer solchen elektronischen Vorrichtung erschwert.

Alternativ wurde zur Vermeidung des Erfordernisses einer derartigen Umschaltaktion bei der Bedienung der elektronischen Vorrichtung der Weg eingeschlagen, den Spurerfassungsbereich, in welchem die Zeicheneingabe erfolgt, und den Funktionsauswahlbereich, in welchem die Softkeys angeordnet sind, lokal zu trennen. Dies hat jedoch den Nachteil, daß bei der fortschreitenden Miniaturisierung der elektronischen Vorrichtungen das ohnehin klein dimensionierte Eingabefeld nun auch noch funktionsmäßig unterteilt wird, was beispielsweise die Zeicheneingabe weiter erschwert. Darüber hinaus hat dies den Nachteil, daß bei einer versehentlichen Bewegung der Aktivierungszone über den Spurerfassungsbereich hinaus in den Funktionsauswahlbereich hinein eine versehentliche Auswahl einer dem Funktionsauswahlbereich zugeordneten Bedienungsfunktion erfolgt und die eigentliche Zeicheneingabe fehlschlägt.

Es ist daher eine Aufgabe der vorliegenden Erfindung, ein Verfahren der eingangs bezeichneten Art sowie eine korrespondierende Vorrichtung zum Durchführen dieses Verfahrens bereitzustellen, wobei ohne gesonderte Umschaltaktion bei effektiver Ausnutzung des flächigen Eingabefeldes eine einfache Eingabe von Informationen möglich ist.

Diese Aufgabe wird zunächst durch ein Verfahren zum Eingeben von Informationen in eine elektronische Vorrichtung mit einer Eingabeeinrichtung gelöst, wobei die Eingabeeinrichtung ein flächiges Eingabefeld und eine auf diesem bewegbare Aktivierungszone aufweist, wobei weiter das Eingabefeld wenigstens einen Spurerfassungsbereich zur Erfassung von Bewegungsspuren der Aktivierungszone und wenigstens einen Funktionsauswahlbereich zur Auswahl einer diesem zugeordneten Bedienungsfunktion aufweist, wobei dann, wenn die Aktivierungszone innerhalb des Funktionsauswahlbereichs ortsstabil positioniert wird, die zugeordnete Bedienungsfunktion ausgewählt wird, und wobei dann, wenn die Aktivierungszone innerhalb des Funktionsauswahlbereichs bewegt wird, eine Auswahl der Bedienungsfunktion unterbleibt.

Dieses Verfahren sieht vor, daß ohne zusätzliche Umschaltaktion die elektronische Vorrichtung selbsttätig erkennt, ob nun die Erfassung von Bewegungsspuren der Aktivierungszone, beispielsweise zur Zeicheneingabe, oder die Auswahl einer einem Funktionsauswahlbereich zugeordneten Bedienungsfunktion erfolgen soll. Diese Differenzierung zwischen den beiden Betriebsmodi wird dadurch erreicht, daß überwacht wird, ob sich die Aktivierungszone innerhalb des Eingabefeldes bewegt. Erfolgt eine Bewegung, so wird die Bewegungsspur der Aktivierungszone erfaßt, beispielsweise zur Zeichen- oder Gesteneingabe, unabhängig davon, ob die Bewegung der Aktivierungszone in einem Bereich des Eingabefeldes erfolgt, welcher durch einen Funktionsauswahlbereich belegt ist oder nicht. Wird hingegen erfaßt, daß sich die Aktivierungszone, beispielsweise ein Cursor, nicht bewegt, so wird überprüft, ob sich die Aktivierungszone gerade auf einem Funktionsauswahlbereich befindet, ist dies der Fall, so wird die diesem Funktionsauswahlbereich zugeordnete Bedienungsfunktion ausgewählt. Zusammengefaßt sieht die Erfindung also vor, den Eingabemodus in Abhängigkeit davon auszuwählen, ob eine Bewegung der Aktivierungszone erfolgt oder nicht.

In einer Weiterbildung der Erfindung kann vorgesehen sein, daß die Eingabeeinrichtung von einem Display gebildet ist. Dies ist die einfachste Variante, wobei die Aktivierungszone dann von einem Cursor oder Mauszeiger respräsentiert werden kann. Dabei kann weiter vorgesehen sein, daß die Aktivierungszone über ein Steuermittel, beispielsweise eine an der elektronischen Vorrichtung ausgebildete Maus, einen Trackball oder dergleichen, steuerbar ist.

Alternativ zu einem reinen Anzeige-Display kann jedoch auch vorgesehen sein, daß die Eingabeeinrichtung von einem berührungssensitiven Schirm, insbesondere einem Touchscreen, gebildet ist. Dies vereinfacht den Aufbau der elektronischen Vorrichtung, da die Aktivierungszone von einem durch Berührung aktivierten Bereich des berührungssensitiven Schirms repräsentierbar ist. Mit anderen Worten kann also beispielsweise mittels eines Fingers oder eines Eingabehilfsmittels - eines Pens oder dergleichen - der Touchscreen zur Eingabe von Informationen genutzt werden.

Um das Eingabefeld der Eingabeeinrichtung effizient auszunützen, kann in einer Weiterbildung der Erfindung vorgesehen - sein, daß sich der Spurerfassungsbereich und der Funktionsauswahlbereich zumindest teilweise überlappen. Wie vorstehen bereits erläutert besteht aufgrund der bewegungsabhängigen Auswahl des jeweils herrschenden Eingabemodus keine Gefahr, daß bei Bewegung der Aktivierungszone zur Erfassung von Bewegungsspuren innerhalb eines Funktionsauswahlbereichs unbeabsichtigt die diesem Funktionsauswahlbereich zugeordnete Bedienungsfunktion ausgewählt wird. Diese Weiterbildung kann vorzugsweise bei miniaturisierten elektronischen Vorrichtungen Anwendung finden, welche kleindimensionierte Eingabeeinrichtungen aufweisen.

Die Bewegungserfassung kann beispielsweise dadurch erfolgen, daß der Aufenthaltsort der Aktivierungszone über der Zeit überwacht wird. In diesem Zusammenhang kann erfindungsgemäß weiter vorgesehen sein, daß zur Erfassung der ortsstabilen Positionierung des Aktivierungsbereichs überprüft wird, ob sich dieser länger als eine vorbestimmte Zeit an einem Ort auf dem Funktionsauswahlbereich befindet. Mit anderen Worten wird bei dieser Abwandlung des erfindungsgemäßen Verfahrens zunächst überprüft, ob sich die Aktivierungszone innerhalb eines Funktionsauswahlbereichs befindet. Ist dies der Fall, so wird ein Zeiterfassungsmittel gestartet und erst nach Ablauf einer vorbestimmten Zeit, innerhalb welcher die Aktivierungszone auf dem Funktionsauswahlbereich ortsstabil positioniert bleibt, die Auswahl der Bedienungsfunktion vorgenommen.

Um die Ergonomie bei dem erfindungsgemäßen Verfahren weiter zu steigern, kann vorgesehen sein, daß bei Auswahl der dem Funktionsauswahlbereich zugeordneten Bedienungsfunktion von der elektronischen Vorrichtung eine Rückmeldung, insbesondere eine visuelle, optische oder akustische Rückmeldung, ausgegeben wird. So ist es möglich, daß nach Auswahl der Bedienungsfunktion die elektronische Vorrichtung beispielsweise den Softkey derart anzeigt, daß dieser graphisch dargestellt perspektivisch zurückversetzt ist, oder daß das Eingabefeld insgesamt kurzzeitig aufleuchtet oder blinkt. Alternativ ist es möglich, daß die elektronische Vorrichtung mit einer Vibrationseinrichtung ausgerüstet ist und nach Auswahl der Bedienungsfunktion die Vibrationseinrichtung kurz aktiviert wird, so daß der Benutzer aufgrund der Vibration der elektronischen Vorrichtung erkennt, daß die Bedienungsfunktion ausgewählt wurde. Auch eine akustische Rückmeldung nach Auswahl der Bedienungsfunktion, beispielsweise durch einen kurzen Piepton, einen Klingelton oder dergleichen, kann als Rückmeldung dienen.

Die Erfindung betrifft ferner eine elektronische Vorrichtung, insbesondere zum Durchführen des vorstehend beschriebenen Verfahrens, umfassend eine Eingabeeinrichtung, wobei die Eingabeeinrichtung ein flächiges Eingabefeld und eine auf diesem bewegbare Aktivierungszone aufweist, wobei weiter das Eingabefeld wenigstens einen Spurerfassungsbereich zur Erfassung von Bewegungsspuren der Aktivierungszone und wenigstens einen Funktionsauswahlbereich zur Auswahl einer diesem zugeordneten Bedienungsfunktion aufweist, wobei dann, wenn die Aktivierungszone innerhalb des Funktionsauswahlbereichs ortsstabil positioniert ist, eine Auswahl der zugeordneten Bedienungsfunktion erfolgt, und wobei dann, wenn sich die Aktivierungszone innerhalb des Funktionsauswahlbereichs bewegt, eine Auswahl der Bedienungsfunktion unterbleibt.

Bei dieser erfindungsgemäßen Vorrichtung kann vorgesehen sein, daß die Eingabeeinrichtung von einem Display gebildet ist. Ferner kann vorgesehen sein, daß die Aktivierungszone von einem über ein Steuermittel, insbesondere einer Maus, einem Trackball oder dergleichen, bewegbaren Cursor gebildet ist. Darüber hinaus kann vorgesehen sein, daß die Eingabeeinrichtung von einem berührungssensitiven Schirm, insbesondere einem Touchscreen gebildet ist. Alternativ kann die Aktivierungszone auch von einem durch Berührung aktivierten Bereich des berührungssensitiven Schirms gebildet sein. Zur Erreichung einer effizienteren Flächenausnützung des Bedienungsfelds kann vorgesehen sein, daß sich der Spurerfassungsbereich und der Funktionsauswahlbereich zumindest teilweise überlappen. Zur Erfassung der Bewegung der Aktivierungszone kann bei der erfindungsgemäßen Vorrichtung ein Bewegungserfassungsmittel vorgesehen sein. Darüber hinaus kann bei dieser ein Zeiterfassungsmittel zur Erfassung der Zeit vorgesehen sein, über welche sich der Aktivierungsbereich an einem Ort auf dem Funktionsauswahlbereich befindet.

Wie vorstehend angedeutet ist es möglich, die Auswahl einer Bedienungsfunktion über eine Rückmeldung zu bestätigen. Hierzu kann vorgesehen sein, daß die Vorrichtung Rückmeldungs-Ausgabemittel zur Ausgabe einer Rückmeldung, insbesondere einer visuellen, optischen oder akustischen Rückmeldung umfaßt.

Im Folgenden wird ein Ausführungsbeispiel der Erfindung anhand der beiliegenden Figuren erläutert. Es stellen dar:
- Fig. 1: eine erfindungsgemäße elektronische Vorrichtung, ausgeführt als Armbanduhren-Mobilfunkgerät, in ihrem Ausgangszustand;
- Fig. 2: die Vorrichtung gemäß Figur 1 während der Erfassung einer Bewegungsspur der Aktivierungszone,
- Fig. 3: ein Ablaufdiagramm zur Erläuterung eines ersten Ausführungsbeispiels des erfindungsgemäßen Verfahrens und
- Fig. 4: ein Ablaufdiagramm zur Erläuterung eines zweiten Ausführungsbeispiels des erfindungsgemäßen Verfahrens.

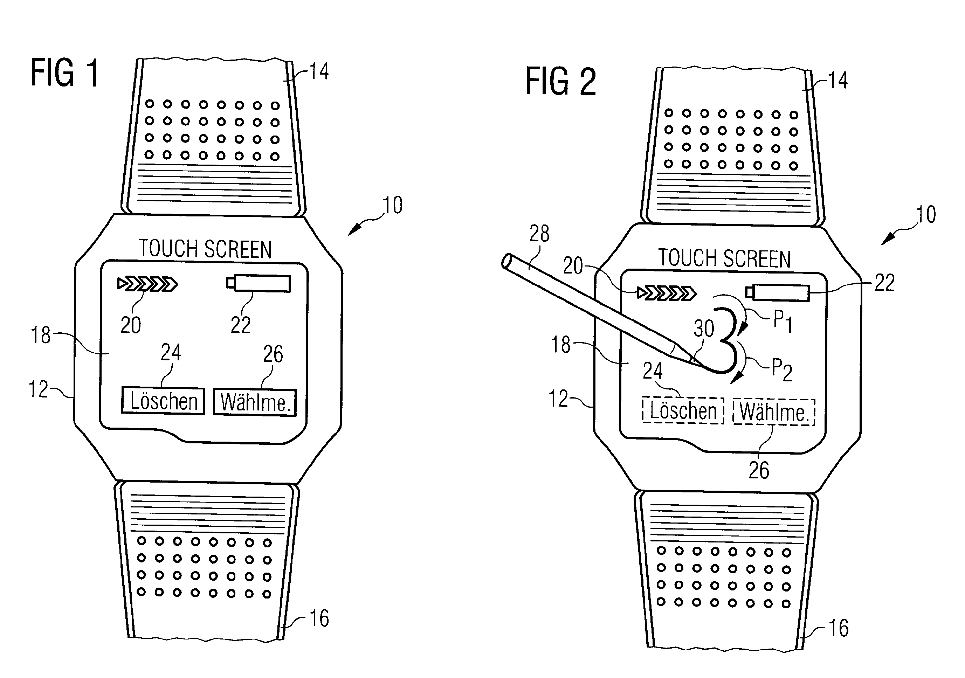

In Figur 1 ist eine erfindungsgemäße elektronische Vorrichtung, ausgeführt als Mobilfunk-Endgerät in Armbanduhrenformat, allgemein mit 10 bezeichnet. Die Vorrichtung 10 umfaßt ein Gehäuse 12, in welchem die elektronischen Komponenten, wie beispielsweise Prozessor, Sende-/Empfangseinheit, Antenne, Akku und dergleichen mehr untergebracht sind. An dem Gehäuse 12 sind Armbandteile 14 und 16 im Stile einer Armbanduhr angeordnet.

Das Gehäuse 12 umfaßt ein berührungsempfindliches Eingabefeld 18, welches als sogenannter Touchscreen ausgeführt ist. Auf dem Eingabefeld 18 sind verschiedene Symbole angezeigt, nämlich das Symbol 20, welches Auskunft über die gegenwärtige Intensität der Sende-/Empfangsfeldstärke gibt, das Symbol 22, welches Auskunft über den gegenwärtigen Ladezustand des Akkus gibt, sowie die beiden Symbole 24 und 26. Der Rest des Eingabefelds 18 ist unbelegt.

Die beiden Symbole 24 und 26 sind als Softkeys ausgeführt, d.h. als virtuelle Druckknöpfe (Buttons), welchen Bedienungsfunktionen des elektronischen Geräts 10 zugeordnet sind. So ist dem Symbol 24 eine Löschfunktion zugeordnet und dem Symbol 26 eine Bestätigungsfunktion.

Betrachtet man Figur 2, so ist erkennbar, daß auf dem Eingabefeld die Ziffer 3 handschriftlich eingetragen wurde. Dies wurde dadurch erreicht, daß mittels eines stiftförmigen Gegenstands 28 die Oberfläche des Bedienungsfelds 18 niedergedrückt wurde, so daß im niedergedrückten Bereich das berührungsempfindliche Bedienungsfeld 18 aktiviert wurde. Die Spitze des Bedienungsstifts 28 wurde dann wie durch die Pfeile P1 und P2 dargestellt entlang einer "3"-förmigen Bewegungsspur bewegt. Gleichzeitig wurde die Bewegungsspur angezeigt, wie dies bei bekannten berührungsempfindlichen Eingabefeldern üblich ist. Aufgrund der Tatsache, daß die Spitze 30 des Bedienungsstifts 28 über das Bedienungsfeld 18 bewegt wird und diese Bewegung erfaßt wird, erkennt die erfindungsgemäße Vorrichtung 10, daß eine Zeicheneingabe, nämlich die Eingabe der Ziffer 3 vorgenommen wird, so daß zur Vermeidung einer erwünschten Aktivierung der den Symbolen 24 und 26 zugeordneten Bedienungsfunktionen löschen und wählen, diese Symbole 24 und 26 deaktiviert werden. Der Benutzer hat somit die Möglichkeit, das gesamte Eingabefeld, also auch die den Symbolen 20, 22, 24, 26 zugeordneten Bereiche zur Zeicheneingabe auszunützen. Eine Auswahl der den jeweiligen Symbolen, beispielsweise den Symbolen 24 und 26, zugeordneten Bedienungsfunktionen erfolgt nun dadurch, daß der Benutzer den Bedienungsstift 28 mit seiner Spitze 30 unmittelbar auf die Bedienungsfunktionen aufsetzt und diesen dort eine Zeit lang im wesentlichen ortsstabil positioniert läßt.

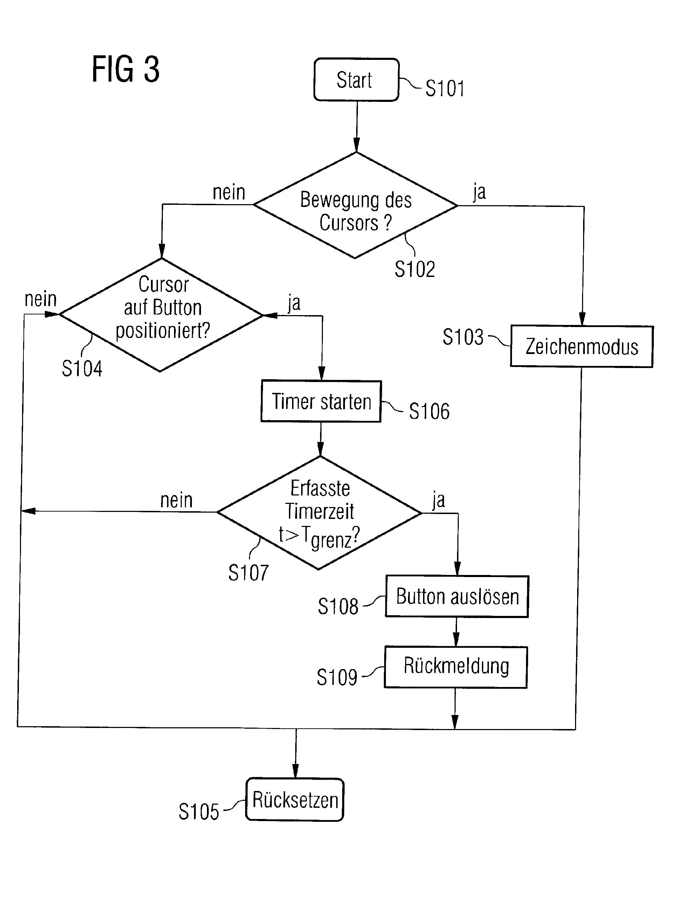

Ein erstes Ausführungsbeispiel des erfindungsgemäßen Verfahrens wird im Detail mit Bezug auf das in Figur 3 dargestellte Ablaufdiagramm erläutert.

In Schritt S101 wird das Programm gestartet. Zunächst wird dann in Schritt S102 überprüft, ob sich der Cursor, d.h. mit Bezug auf Figuren 1 und 2 der durch Niederdrücken der Spitze des Bedienungsstifts 28 aktivierte Bereich des Eingabefelds 18, bewegt oder nicht. Ist dies der Fall, so wird in Schritt S104 der Zeichenmodus ausgewählt und die Funktionsauswahlbereiche, d.h. die Symbole 24 und 26, deaktiviert.

Wird der Cursor nicht bewegt, so wird in Schritt S104 überprüft, ob der sich nicht bewegende Cursor auf einem der Symbole 24 oder 26 positioniert ist. Ist dies nicht der Fall, so endet das Programm mit Schritt S105. Ist dies hingegen der Fall, so wird in Schritt S106 ein Zeitgeber (Timer) gestartet. Daraufhin wird in Schritt S107 überprüft, ob die von dem Timer gezählte Zeit größer als eine vorbestimmte Grenzzeit T_{grenz} ist. Ist dies nicht der Fall, so wird wiederum das Programm beendet. Ist dies der Fall, so wurde der Cursor, genauer gesagt die Stiftspitze 30, länger als die vorbestimmte Zeit T_{grenz} auf dem jeweiligen Symbol 24 oder 26 im wesentlichen ortsstabil positioniert. Unter dieser Bedingung wird die dem jeweiligen Symbol 24 oder 26 zugeordnete Bedienungsfunktion ausgewählt. Im Anschluß daran erfolgt eine Rückmeldung, beispielsweise durch kurzes Aufblinken der Beleuchtung des Eingabefelds 18, durch Vibration der Vorrichtung 10 oder durch ein akustisches Signal, wodurch dem Benutzer die Aktivierung der Bedienungsfunktion bestätigt wird.

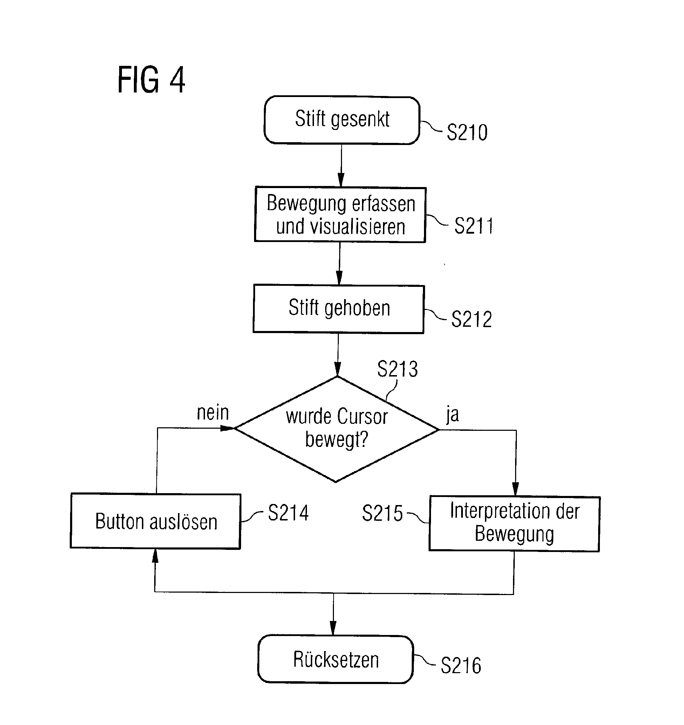

Ein zweites Ausführungsbeispiel des erfindungsgemäßen Verfahrens wird im Detail mit Bezug auf das in Figur 4 dargestellte Ablaufdiagramm erläutert.

In Schritt S210 wird erfasst, ob der Stift 28 auf Eingabefeld 18 aufgesetzt wurde und daraufhin wird das Programm gestartet. In der Folge wird dann in Schritt S211 erfasst, ob sich der Stift 28 auf dem Bedienungsfeld 18 bewegt. Ist dies der Fall, so wird zugleich die Bewegung visualisiert. Nach der Bewegung wird eine Abheben des Stiftes 28 von dem Bedienungsfeld 18 in Schritt S212 erfasst. Anschließend wird in S213 überprüft, ob der Stift 28 tatsächlich auf dem Bedienungsfeld 18 bewegt wurde, oder ob er bis zum Abheben von dem Bedienungsfeld 18 auf diesem im wesentlichen ortsstabil gehalten wurde. Wurde der Stift 28 im wesentlichen nicht bewegt, so wird in Schritt S214 der an dieser Position im Bedienungsfeld 18 liegende Button bzw. Funktionsauswahlbereich aktiviert und das Programm wird in Schritt S216 zurückgesetzt. Wurde der Stift 28 hingegen auf dem Bedienungsfeld 28 bewegt, so wird diese Bewegung in Schritt S215 interpretiert, d.h. sie wird einer Zeichenerkennungsprozedur unterzogen und das Programm wird in Schritt S216 zurückgesetzt.

Mit der Erfindung ist es möglich, eine einfache und ergonomisch bedienbare Eingabemöglichkeit bei einer elektronischen Vorrichtung mit flächigem Eingabefeld zu schaffen, ohne daß umständliche Umschaltaktionen zwischen verschiedenen Bedienungsmodi oder eine platzraubende Unterteilung des Eingabefelds in Zeicheneingabefelder und Buttons erforderlich ist.

## Patentansprüche

1. Verfahren zum Eingeben von Informationen in eine elektronische Vorrichtung (10) mit einer Eingabeeinrichtung (18), wobei die Eingabeeinrichtung (18) ein flächiges Eingabefeld (18) und eine auf diesem bewegbare Aktivierungszone (bei 30) aufweist, wobei weiter das Eingabefeld (18) wenigstens einen Spurerfassungsbereich (18, 20, 22, 24, 26) zur Erfassung von Bewegungsspuren der Aktivierungszone und wenigstens einen Funktionsauswahlbereich (20, 22, 24, 26) zur Auswahl einer diesem zugeordneten Bedienungsfunktion aufweist, wobei dann, wenn die Aktivierungszone innerhalb des wenigstens einen Funktionsauswahlbereichs (20, 22, 24, 26) ortsstabil positioniert wird, die zugeordnete Bedienungsfunktion ausgewählt wird, und wobei dann, wenn die Aktivierungszone innerhalb des Funktionsauswahlbereichs (20, 22, 24, 26) bewegt wird, eine Auswahl der Bedienungsfunktion unterbleibt.

2. Verfahren nach Anspruch 1, wobei die Eingabeeinrichtung von einem Display gebildet ist.

3. Verfahren nach Anspruch 1 oder 2, wobei die Aktivierungszone von einem über ein Steuermittel, insbesondere einer Maus, einem Trackball oder dergleichen, bewegbaren Cursor gebildet wird.

4. Verfahren nach einem der vorangehenden Ansprüche, wobei die Eingabeeinrichtung (18) von einem berührungssensitiven Schirm, insbesondere einem Touchscreen, gebildet ist.

5. Verfahren nach Anspruch 4, wobei die Aktivierungszone (bei 30) von einem durch Berührung aktivierten Bereich des berührungssensitiven Schirms gebildet ist.

6. Verfahren nach einem der vorangehenden Ansprüche, wobei sich der Spurerfassungsbereich (18) und der Funktionsauswahlbereich (20, 22, 24, 26) zumindest teilweise überlappen.

7. Verfahren nach einem der vorangehenden Ansprüche, wobei zur Erfassung der Bewegung der Aktivierungszone deren Aufenthaltsort über der Zeit überwacht wird (S104, S106, S107).

8. Verfahren nach Anspruch 7, wobei zur Erfassung der ortsstabilen Positionierung des Aktivierungsbereichs überprüft wird, ob sich dieser länger als eine vorbestimmte Zeit an einem Ort auf dem Funktionsauswahlbereich befindet (S107).

9. Verfahren nach einem der vorangehenden Ansprüche, wobei bei Auswahl der dem Funktionsauswahlbereich zugeordneten Bedienungsfunktion von der elektronischen Vorrichtung eine Rückmeldung, insbesondere eine visuelle, haptische oder akustische Rückmeldung, ausgegeben wird (S109).

10. Elektronische Vorrichtung (10), insbesondere zum Durchführen des Verfahrens nach einem der vorangehenden Ansprüche, umfassend eine Eingabeeinrichtung (18), wobei die Eingabeeinrichtung ein flächiges Eingabefeld (18) und eine auf diesem bewegbare Aktivierungszone (bei 30) aufweist, wobei weiter das Eingabefeld (18) wenigstens einen Spurerfassungsbereich (18) zur Erfassung von Bewegungsspuren der Aktivierungszone und wenigstens einen Funktionsauswahlbereich (20, 22, 24, 26) zur Auswahl einer diesem zugeordneten Bedienungsfunktion aufweist, wobei dann, wenn die Aktivierungszone innerhalb des wenigstens einen Funktionsauswahlbereichs (20, 22, 24, 26) ortsstabil positioniert ist, eine Auswahl der zugeordneten Bedienungsfunktion erfolgt, und wobei dann, wenn sich die Aktivierungszone innerhalb des Funktionsauswahlbereichs bewegt, eine Auswahl der Bedienungsfunktion unterbleibt.

11. Vorrichtung (10) nach Anspruch 10, wobei die Eingabeeinrichtung von einem Display gebildet ist.

12. Vorrichtung (10) nach Anspruch 10 oder 11, wobei die Aktivierungszone von einem über ein Steuermittel, insbesondere einer Maus, einem Trackball oder dergleichen, bewegbaren Cursor gebildet ist.

13. Vorrichtung (10) nach einem der Ansprüche 10 - 12, wobei die Eingebeeinrichtung von einem berührungssensitiven Schirm (18), insbesondere einem Touchscreen gebildet ist.

14. Vorrichtung (10) nach Anspruch 13, wobei die Aktivierungszone von einem durch Berührung aktivierten Bereich (bei 30) des berührungssensitiven Schirms (18) gebildet ist.

15. Vorrichtung nach einem der Ansprüche 10 - 14, wobei sich der Spurerfassungsbereich (18) und der Funktionsauswahlbereich (20, 22, 24, 26) zumindest teilweise überlappen.

16. Vorrichtung nach einem der Ansprüche 10 - 15, umfassend Bewegungserfassungsmittel (S102) zur Erfassung der Bewegung der Aktivierungszone.

17. Vorrichtung nach Anspruch 16, umfassend Zeiterfassungsmittel (S106, S107) zur Erfassung der Zeit, über welche sich der Aktivierungsbereich an einem Ort auf dem Funktionsauswahlbereich befindet.

18. Vorrichtung nach einem der Ansprüche 10 - 17, umfassend Rückmeldungs-Ausgabemittel zur Ausgabe einer Rückmeldung, insbesondere einer visuellen, haptischen oder akustischen Rückmeldung.
